(19) Europäisches Patentamt
European Patent Office
Office européen des brevets

(11) **EP 4 131 175 A1**

(12) **EUROPEAN PATENT APPLICATION**

(43) Date of publication:
**08.02.2023 Bulletin 2023/06**

(51) International Patent Classification (IPC):
**G06V 10/10** (2022.01)   **G06V 10/82** (2022.01)
**G06V 10/44** (2022.01)   **G06V 10/80** (2022.01)
**G06V 20/58** (2022.01)

(21) Application number: **22189006.4**

(22) Date of filing: **05.08.2022**

(52) Cooperative Patent Classification (CPC):
**G06V 10/16; B60W 60/0011; G06N 3/08;
G06T 7/73; G06V 10/454; G06V 10/806;
G06V 10/82; G06V 20/58**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.08.2021  US 202117394973
05.08.2021  US 202117395003**

(71) Applicant: **Argo AI, LLC
Pittsburgh, PA 15222 (US)**

(72) Inventors:
• **Hotson, Guy
Palo Alto, 94304 (US)**
• **Ferroni, Francesco
80805 München (DE)**
• **Banvait, Harpreet
Pittsburgh, 15222 (US)**
• **Shin, Kiwoo
Pittsburgh, 15222 (US)**
• **Cebron, Nicolas
Palo Alto, 94304 (US)**

(74) Representative: **Hofstetter, Schurack & Partner
Patent- und Rechtsanwaltskanzlei
PartG mbB
Balanstrasse 57
81541 München (DE)**

(54) **SYSTEMS AND METHODS FOR IMAGE BASED PERCEPTION**

(57)      Systems and methods for image-based perception. The methods comprise: capturing images by a plurality of cameras with overlapping fields of view; generating, by a computing device, spatial feature maps indicating locations of features in the images; identifying, by the computing device, overlapping portions of the spatial feature maps; generating, by the computing device, at least one combined spatial feature map by combining the overlapping portions of the spatial feature maps together; and/or using, by the computing device, the at least one combined spatial feature map to define a predicted cuboid for at least one object in the images.

FIG. 4

EP 4 131 175 A1

**Description**

BACKGROUND

Statement of the Technical Field

The present disclosure relates generally to image-based machine learning systems. More particularly, the present disclosure relates to implementing systems and methods for feature extraction using multi-camera views to perform perception feature fusion for tasks such as cuboid association.

Description of the Related Art

Modern day vehicles have at least one on-board computer and have internet/satellite connectivity. The software running on these on-board computers monitor and/or control operations of the vehicles. The vehicle also comprises cameras and LiDAR detectors for detecting objects in proximity thereto. The cameras capture images of the scenes in proximity to the vehicles. The LiDAR detectors generate LiDAR datasets that measure the distance from the vehicle to the objects at a plurality of different times. These images and distance measurements can be used for identifying objects, tracking movements of the object, making predictions as to the object's trajectory, and planning paths of travel for the vehicle based on the predicted objects trajectory.

SUMMARY

The present disclosure concerns implementing systems and methods for image-based feature fusion. The methods comprise: capturing images by a plurality of cameras with overlapping fields of view; generating, by a computing device, spatial feature maps indicating features in the images at various 2D locations; identifying, by the computing device, overlapping portions of the spatial feature maps; generating, by the computing device, combined spatial feature map(s) by combining the overlapping portions of the spatial feature maps together; using, by the computing device, the combined spatial feature map(s) to define a predicted output as a cuboid for at least one object in the images; and/or using the predicted cuboid to control autonomous operations of a vehicle.

The spatial feature maps may be generated using a feature extraction module such as a Convolutional Neural Network (CNN) or a position sensitive transformer network. The overlapping portions of the spatial feature maps may be identified based on: similarities between features in a first spatial feature map and features in a second spatial feature map; a distance between a feature in a first spatial feature map and a corresponding feature in a second spatial feature map; properties of predictions of the corresponding areas of the feature maps (e.g., 3D locations of predicted cuboids); and/or the camera calibration in tandem with depth values determined for the features using LiDAR datasets or a depth map. A portion of a first spatial feature map and a portion of a second spatial feature map may be considered overlapping portions when (i) features in the first and second spatial feature maps are similar by a certain amount and/or (ii) a distance between corresponding features in the first and second spatial feature maps are less than a threshold value. The combined spatial feature map(s) may be generated by adding together location values for corresponding features in the overlapping portions of the spatial feature maps to produce combined location values.

Implementing systems of the above-described methods for image-based perception and can include, but are not limited to, a processor and a non-transitory computer-readable storage medium comprising programming instructions that are configured to cause the processor to implement a method for image-based perception.

BRIEF DESCRIPTION OF THE DRAWINGS

The present solution will be described with reference to the following drawing figures, in which like numerals represent like items throughout the figures.

FIG. 1 is an illustration of a system.

FIG. 2 is an illustration of an architecture for a vehicle.

FIG. 3 is an illustration of an architecture for a computing device.

FIG. 4 provides a flow diagram of an illustrative method for image-based perception for predicting 3D cuboids.

FIG. 5 provides an illustration that is useful for understanding overlapping portions of spatial feature maps used in image-based perception for a task such as semantic segmentation.

FIG. 6 provides a flow diagram of another illustrative method for image-based perception for a task such as 3D cuboid prediction.

FIG. 7 provides an illustration of a method for associating predicted cuboids with objects.

FIG. 8 provides an illustration of another method for associating predicted cuboids with objects.

FIG. 9 provides an illustration that is useful for understanding how predicted cuboids are associated with objects.

FIG. 10 provides an illustration that is useful for understanding how predicted cuboids can be used to generate refined cuboids.

FIG. 11 provides a block diagram that is useful for understanding how a vehicle is controlled in accordance with the present solution.

DETAILED DESCRIPTION

As used in this document, the singular forms "a," "an," and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to." Definitions for additional terms that are relevant to this document are included at the end of this Detailed Description.

An "electronic device" or a "computing device" refers to a device that includes a processor and memory. Each device may have its own processor and/or memory, or the processor and/or memory may be shared with other devices as in a virtual machine or container arrangement. The memory will contain or receive programming instructions that, when executed by the processor, cause the electronic device to perform one or more operations according to the programming instructions.

The terms "memory," "memory device," "data store," "data storage facility" and the like each refer to a non-transitory device on which computer-readable data, programming instructions or both are stored. Except where specifically stated otherwise, the terms "memory," "memory device," "data store," "data storage facility" and the like are intended to include single device embodiments, embodiments in which multiple memory devices together or collectively store a set of data or instructions, as well as individual sectors within such devices.

The terms "processor" and "processing device" refer to a hardware component of an electronic device that is configured to execute programming instructions. Except where specifically stated otherwise, the singular term "processor" or "processing device" is intended to include both single-processing device embodiments and embodiments in which multiple processing devices together or collectively perform a process.

The term "vehicle" refers to any moving form of conveyance that is capable of carrying either one or more human occupants and/or cargo and is powered by any form of energy. The term "vehicle" includes, but is not limited to, cars, trucks, vans, trains, autonomous vehicles, aircraft, aerial drones and the like. An "autonomous vehicle" is a vehicle having a processor, programming instructions and drivetrain components that are controllable by the processor without requiring a human operator. An autonomous vehicle may be fully autonomous in that it does not require a human operator for most or all driving conditions and functions, or it may be semi-autonomous in that a human operator may be required in certain conditions or for certain operations, or that a human operator may override the vehicle's autonomous system and may take control of the vehicle.

In this document, when terms such as "first" and "second" are used to modify a noun, such use is simply intended to distinguish one item from another and is not intended to require a sequential order unless specifically stated. In addition, terms of relative position such as "vertical" and "horizontal", or "front" and "rear", when used, are intended to be relative to each other and need not be absolute, and only refer to one possible position of the device associated with those terms depending on the device's orientation.

The present solution is described herein in the context of an autonomous vehicle. The present solution is not limited to autonomous vehicle applications. The present solution can be used in other applications such as robotic applications (e.g., to control movement of an autonomous robot or articulating arm).

The present solution relates to implementing systems and methods for image-based perception. When performing tasks such as image-based perception with cameras having partially overlapping Fields of View (FOV), two challenges arise: (i) how to associate predictions associated with images captured by separate cameras; and (ii) how to leverage two views in a scene. In the scope of autonomous vehicles, challenge (i) can lead to detrimental behavior such as the prediction of multiple actors in a scene for a single object. The present solution addresses challenges (i) and (ii).

In this regard, the methods generally comprise: (i) capturing images using monocular cameras with overlapping FOVs and/or LiDAR datasets from different FOVs; (ii) using the images in a feature extraction module to generate spatial feature maps by applying filters or feature detectors to the images; (iii) optionally fusing the feature maps from the monocular cameras; (iv) using the spatial feature maps to define predictions such as monocular amodal cuboids for each object in the images; (v) optionally associating the predictions from the different feature maps with objects; and (vi) optionally using the predicted cuboids to control autonomous operations of a vehicle.

The term "spatial feature map" as used herein refers to a spatial-relational construct of an object. The spatial feature map is output from a function that converts or otherwise transforms a feature vector in one space (e.g., an image domain) into a feature vector in another space (e.g., a high-dimensional domain). For example, the function can return a spatial feature map comprising [a first detected feature identifier, a first detected feature classification, a first detected feature location in an image, a strength of a link from the first detected feature to a real object, a second feature identifier, a second detected feature classification, a second feature location in an image, a strength of a link from the second detect feature to the real object, ...] from an input vector [a first pixel identifier, a first pixel location, a first pixel color, a second pixel identifier, a second pixel location, a second pixel color, ...]. Each strength value of the spatial feature map can comprise a probabilistic strength of relation between the feature and a certain detected object (e.g., vehicle, pedestrian, bicycle, dog, etc.) in an image. The present solution is not limited to the particulars of this example.

In some scenarios, operation (iii) involves: identifying overlapping portions of the spatial feature maps; combining the overlapping portions of the spatial feature maps together to generate a combined spatial feature map; and using the combined spatial feature map to define predictions (e.g., semantic segmentation of the scene or a predicted cuboid for each object, where each predicted cuboid comprises an oriented 3D box encompassing a given object in proximity to the vehicle).

In those and/or other scenarios, operation (iii) involves: defining predictions at each location of the spatial feature maps, for example, using an algorithm for classification and regression of 3D coordinates and/or the overlapping portions of spatial feature maps as described above; and optionally performing an additional embedding with weights trained via, for example, a triplet or quadruplet loss algorithm to associate each prediction across cameras with overlapping FOVs based on similarities of visual features thereof.

Illustrative Implementing Systems

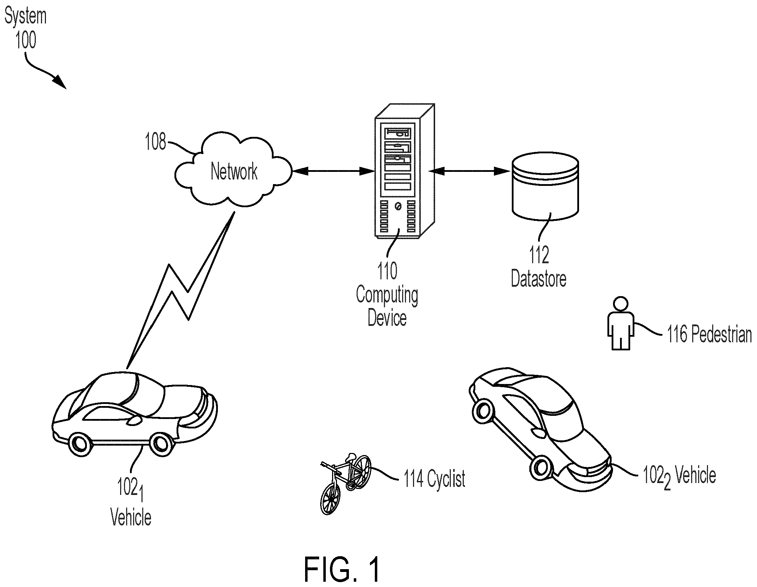

Referring now to FIG. 1, there is provided an illustration of an illustrative system 100. System 100 comprises a vehicle 102i that is traveling along a road in a semi-autonomous or autonomous manner. Vehicle 102i is also referred to herein as an autonomous vehicle (AV). The AV 102i can include, but is not limited to, a land vehicle (as shown in FIG. 1), an aircraft, a watercraft, a subterrene, or a spacecraft.

AV 102i is generally configured to detect objects $102_2$, 114, 116 and perceive scenes in proximity thereto. The objects can include, but are not limited to, a vehicle $102_2$, a cyclist 114 (such as a rider of a bicycle, electric scooter, motorcycle, or the like) and/or a pedestrian 116. The image-based perception is achieved in accordance with a novel image-based perception process of the present solution. The novel image-based perception process will be described in detail below. The image-based perception process can be performed at the AV 102i, at the remote computing device 110, or partially at both the AV 102i and the remote computing device 110. Accordingly, information related to image-based perception may be communicated between the AV and a remote computing device 110 via a network 108 (e.g., the Internet, a cellular network and/or a radio network). The image-based perception related information may also be stored in a datastore 112.

When such an image-based perception is made, AV $102_1$ performs operations to: generate one or more possible object trajectories for the detected object; and analyze at least one of the generated possible object trajectories to determine whether or not there is an undesirable level of probability that a collision will occur between the AV and object if the AV is to follow a given trajectory. If not, the AV $102_1$ is caused to follow the given vehicle trajectory. If so, the AV $102_1$ is caused to (i) follow another vehicle trajectory with a relatively low probability of collision with the object or (ii) perform a maneuver to reduce the probability of collision with the object or avoid collision with the object (e.g., brakes and/or changes direction of travel).

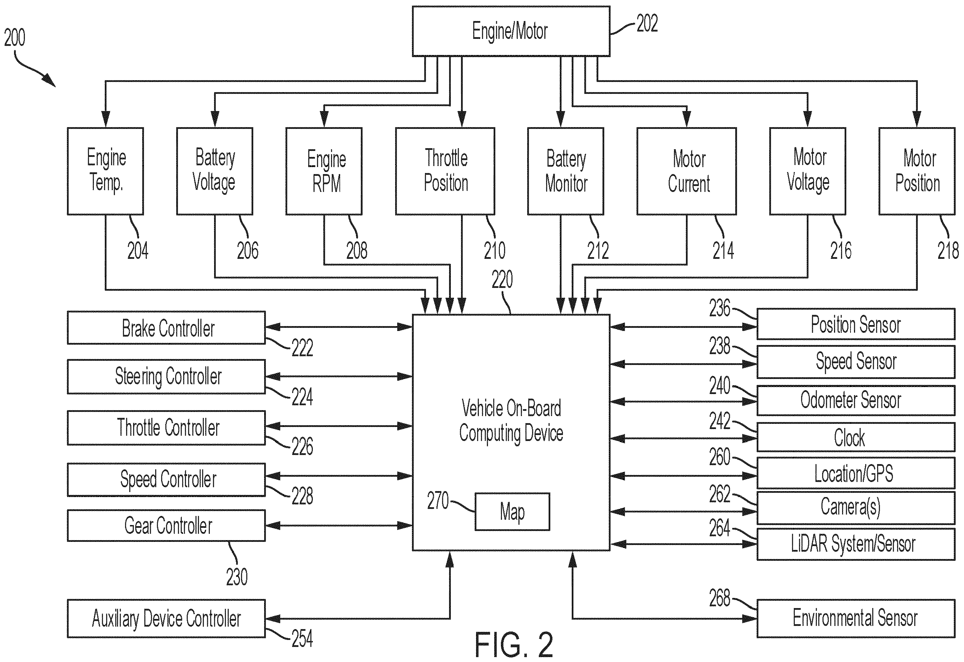

Referring now to FIG. 2, there is provided an illustration of an illustrative system architecture for a vehicle 200. Vehicles $102_1$ and/or $102_2$ of FIG. 1 can have the same or similar system architecture as that shown in FIG. 2. Thus, the following discussion of vehicle 200 is sufficient for understanding vehicle(s) 102i, $102_2$ of FIG. 1.

As shown in FIG. 2, the vehicle 200 includes an engine or motor 202 and various sensors 204-218 for measuring various parameters of the vehicle. In gas-powered or hybrid vehicles having a fuel-powered engine, the sensors may include, for example, an engine temperature sensor 204, a battery voltage sensor 206, an engine Rotations Per Minute (RPM) sensor 208, and a throttle position sensor 210. If the vehicle is an electric or hybrid vehicle, then the vehicle may have an electric motor, and accordingly will have sensors such as a battery monitoring system 212 (to measure current, voltage and/or temperature of the battery), motor current **214** and voltage **216** sensors, and motor position sensors such as resolvers and encoders **218.**

Operational parameter sensors that are common to both types of vehicles include, for example: a position sensor **236** such as an accelerometer, gyroscope and/or inertial measurement unit; a speed sensor **238;** and an odometer sensor **240.** The vehicle also may have a clock **242** that the system uses to determine vehicle time during operation. The clock **242** may be encoded into the vehicle on-board computing device, it may be a separate device, or multiple clocks may be available.

The vehicle also will include various sensors that operate to gather information about the environment in which the vehicle is traveling. These sensors may include, for example: a location sensor **260** (e.g., a Global Positioning System (GPS) device); and image-based perception sensors such as one or more cameras **262.** The sensors also may include environmental sensors **268** such as a precipitation sensor and/or ambient temperature sensor. The image-based perception sensors may enable the vehicle to detect objects that are within a given distance range of the vehicle **200** in any direction, while the environmental sensors collect data about environmental conditions within the vehicle's area of travel.

During operations, information is communicated from the sensors to a vehicle on-board computing device **220.** The vehicle on-board computing device **220** analyzes the data captured by the sensors and optionally controls operations of the vehicle based on results of the analysis. For example, the vehicle on-board computing device **220** may control: braking via a brake controller **232;** direction via a steering controller **224;** speed and acceleration via a throttle controller **226** (in a gas-powered vehicle) or a motor speed controller **228** (such as a current level controller in an electric vehicle); a differential gear controller **230** (in vehicles with transmissions); and/or other controllers.

Geographic location information may be communicated from the location sensor **260** to the vehicle on-board computing device **220,** which may then access a map of the environment that corresponds to the location information to determine known fixed features of the environment such as streets, buildings, stop signs and/or stop/go signals.

Captured images are communicated from the cameras **262** to the vehicle on-board computing device **220.** The captured images are processed by the vehicle on-board computing device **220** to perceive the scene in proximity to the vehicle **200** in accordance with the novel image-based perception algorithm(s) of the present solution. The novel image-based perception algorithm(s) will be described in detail below.

When the vehicle on-board computing device **220** detects a moving object, the vehicle on-board computing device **220** will generate one or more possible object trajectories for the detected object, and analyze the possible object trajectories to assess the probability of a collision between the object and the AV if the AV was to follow a given vehicle trajectory. If the probability does not exceed the acceptable threshold, then the vehicle on-board computing device **220** may cause the vehicle **200** to follow the given trajectory. If the probability exceeds an acceptable threshold, the vehicle on-board computing device **220** performs operations to: (i) determine an alternative vehicle trajectory and analyze whether the collision can be avoided if the AV follows this alternative vehicle trajectory; or (ii) causes the AV to perform a maneuver (e.g., brake, accelerate, or swerve).

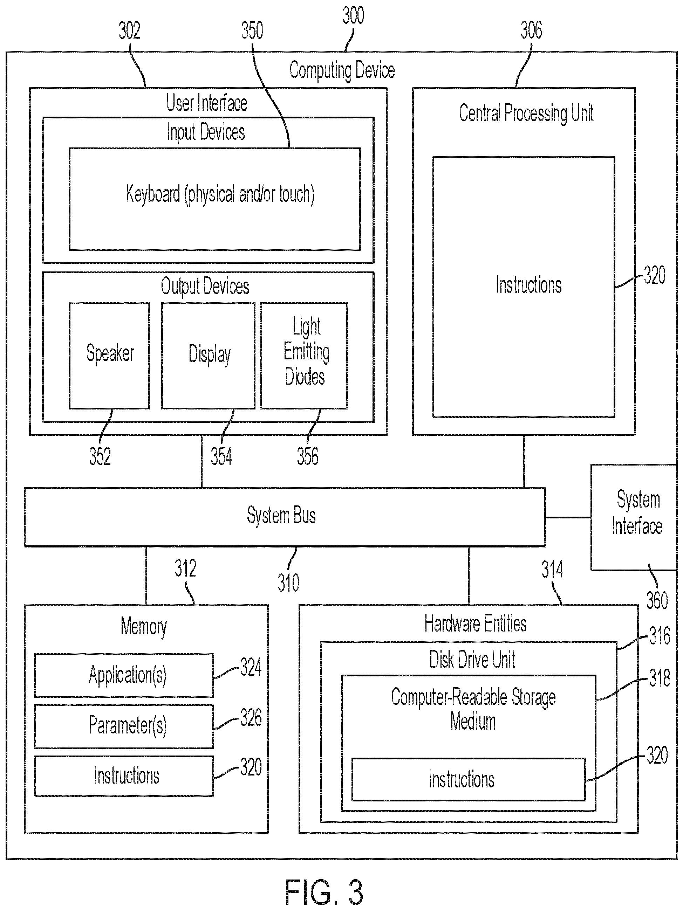

Referring now to FIG. 3, there is provided an illustration of an illustrative architecture for a computing device **300.** The computing device **110** of FIG. 1 and/or the vehicle on-board computing device **220** of FIG. 2 is/are the same as or similar to computing device **300.** As such, the discussion of computing device **300** is sufficient for understanding the computing device **110** of FIG. 1 and the vehicle on-board computing device **220** of FIG. 2.

Computing device **300** may include more or less components than those shown in FIG. 3. However, the components shown are sufficient to disclose an illustrative solution implementing the present solution. The hardware architecture of FIG. 3 represents one implementation of a representative computing device configured to operate a vehicle, as described herein. As such, the computing device **300** of FIG. 3 implements at least a portion of the method(s) described herein.

Some or all components of the computing device **300** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 3, the computing device **300** comprises a user interface **302,** a Central Processing Unit (CPU) **306,** a system bus **310,** a memory **312** connected to and accessible by other portions of computing device **300** through system bus **310,** a system interface **360,** and hardware entities **314** connected to system bus **310.** The user interface can include input devices and output devices, which facilitate user-software interactions for controlling operations of the computing device **300.** The input devices include, but are not limited to, a physical and/or touch keyboard **350.** The input devices can be connected to the computing device **300** via a wired or wireless connection (e.g., a Bluetooth® connection). The output devices include, but are not limited to, a speaker **352,** a display **354,** and/or light emitting diodes **356.** System interface **360** is configured to facilitate wired or wireless communications to and from external devices (e.g., network nodes such as access points, etc.).

At least some of the hardware entities **314** perform actions involving access to and use of memory **312,** which can be a Random Access Memory (RAM), a disk drive, flash memory, a Compact Disc Read Only Memory (CD-ROM) and/or another hardware device that is capable of storing instructions and data. Hardware entities **314** can include a disk drive unit **316** comprising a computer-readable storage medium **318** on which is stored one or more sets of instructions **320** (e.g., software code) configured to implement one or more of the methodologies, procedures, or functions described herein. The instructions **320** can also reside, completely or at least partially, within the memory **312** and/or within the CPU **306** during execution thereof by the computing device **300**. The memory **312** and the CPU **306** also can constitute machine-readable media. The term "machine-readable media", as used here, refers to a single medium or multiple media (e.g., a centralized or distributed database, and/or associated caches and servers) that store the one or more sets of instructions **320**. The term "machine-readable media", as used here, also refers to any medium that is capable of storing, encoding or carrying a set of instructions **320** for execution by the computing device **300** and that cause the computing device **300** to perform any one or more of the methodologies of the present disclosure.

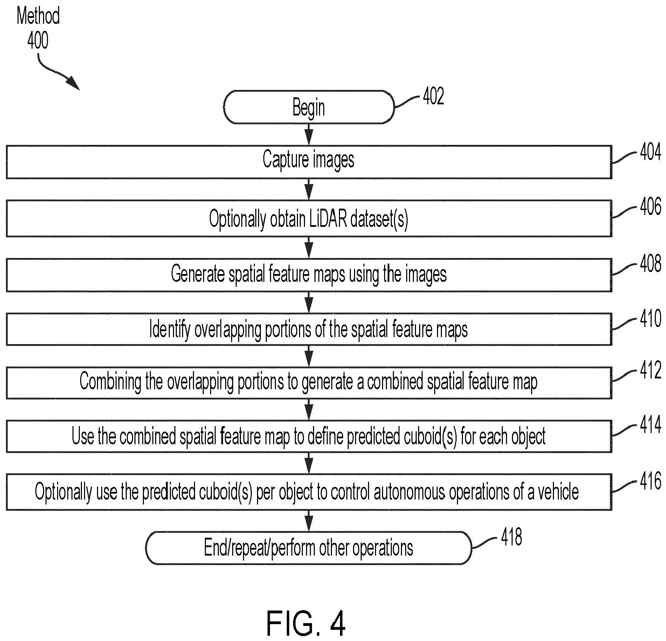

Referring now to FIG. 4, there is provided a flow diagram of an illustrative method 400 for image-based perception. In method **400**, machine learning techniques (such as CNNs and transformer networks) are used to extract spatial feature maps from images, which are in turn are used to make prediction such as 2D or 3D bounding boxes for objects or per-pixel segmentation. To simultaneously solve the challenges of associating predictions from multiple cameras and leveraging the different perspectives of a given scene, spatial feature maps are combined from the overlapping regions of the different cameras. The combined features are then used to perform the predictions corresponding to the overlapping region. Multiple approaches could be taken for determining the overlapping regions of the feature maps, such as (i) looking at the distance of the extracted features from different cameras and (ii) using the camera calibration in combination with a predicted depth map, LiDAR returns, and/or prior assumptions of where camera rays would intersect given a high definition map. After association, features can be combined by, for example, simply adding them together or by concatenating them.

As shown in FIG. 4, method **400** begins with **402** and continues with **404** where images are captured. The images can be captured by monocular cameras (e.g., cameras **262** of FIG. 2) with overlapping FOVs. The monocular cameras may be deployed on an AV (e.g., AV $102_1$ of FIG. 1). Each image comprises 3 layers (or channels) of information superimposed on each other - a Red (R) layer, a Green (G) layer and a Blue (B) layer. This image may also referred to as an RGB image. The images can be stored in a datastore local to and/or remote from the AV (e.g., datastore **112** of FIG. 1 and/or memory **312** of FIG. 3).

In **406,** LiDAR datasets may optionally be obtained by a computing device (e.g., computing device **110** of FIG. 1 and/or the vehicle on-board computing device **220** of FIG. 2). The LiDAR datasets may be generated by a LiDAR system (e.g., LiDAR system **264** of FIG. 2) of the AV. LiDAR datasets and LiDAR system are well known.

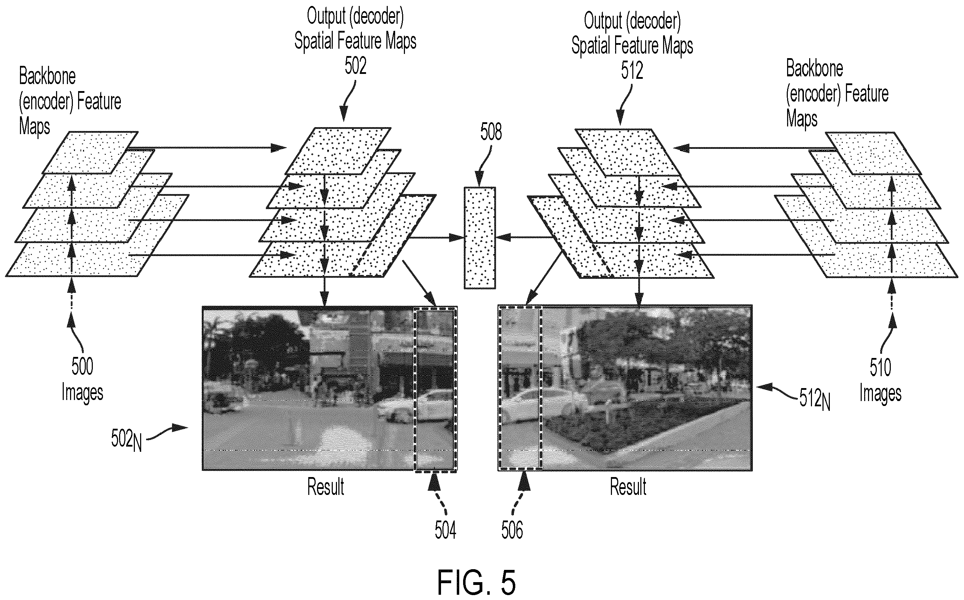

In **408,** spatial feature maps are generated by the computing device using the images captured in **404**. The images can be used in a feature extraction module such as a CNN to generate the spatial feature maps. For example, images **500, 510** of FIG. 5 are input into a CNN to produce output spatial feature maps **502, 512** of FIG. 5. CNNs and spatial feature maps are well known. The CNNs can apply filters or feature detectors to the images to produce the spatial feature maps. For example, a trained CNN takes an RGB image as an input, and optionally outputs one or more predictions such as the class of the 2D image (e.g., a person, a vehicle, a cyclist, a dog, etc.). The class of the image is determined based on learned data patterns during training of the CNN Each spatial feature map indicates a location and a strength of each detected feature in an image. The features can include, but are not limited to, edges, vertical lines, horizontal lines, bends and/or curves. A certain combination of features in a certain area of an image can indicate that a larger, more complex feature may exists in the image. For example, a spatial feature map could detect a cyclist (e.g., cyclist **114** of FIG. 1) from a combination of line features and circle features in a given area of an image.

In **410,** the computing device performs operations to identify overlapping portions of the spatial feature maps. Illustrative overlapping portions **504, 506** of spatial feature maps $502_N$, $512_N$ are shown in FIG. 5. There are different approaches for identifying the overlapping portions of the spatial feature maps. One approach is to consider features of two images to be located in overlapping portions thereof when (i) the features are similar by a certain degree (> 70%) and the distance between the predicted output of the two spatial feature maps is less than a threshold value (e.g., a cuboid centroid 10 cm in the x-direction and/or y-direction of the vehicle frame). Another approach is to: use the LiDAR datasets obtained in **406** and/or a depth map to determine a depth of each feature in the spatial feature maps; generate 3D coordinates for each feature in the spatial feature maps using the 2D coordinates of the images (i.e., the x-coordinates and the y-coordinates) and the depths as z-coordinates; and use the 3D coordinates to identify overlapping portions of the spatial feature maps. For example, portions of two spatial feature maps are considered overlapping portions when a distance between 3D coordinates of two features is less than a threshold value.

In **412,** the overlapping portions of the spatial feature maps are combined together to form a combined spatial feature map. For example, overlapping portions **504, 506** of spatial feature maps $502_N$, $512_N$ are combined together to form combined spatial feature map **508** of FIG. 5. The overlapping portions of spatial feature maps can be combined by: adding corresponding feature location values together to generate a combined feature location value; and adding the corresponding strength values together to obtain a combined strength value. Alternatively, the computing device can learn weights for fusing the feature location values and/or strength values together via a mathematical equation. The mathematical equation (1) may be defined as follows.

$$\mathbf{L_{combined}} = \mathbf{w_1 L_1} + \mathbf{w_2 L_2,} \qquad\qquad (1)$$

wherein $\mathbf{L_{combined}}$ represents a combined feature location value, $\mathbf{L_i}$ represents a location of a given feature in a first image, $\mathbf{L_2}$ represents a location of a corresponding feature in a second image, and $\mathbf{w_1, w_2}$ represent weights. The weights may be predefined or dynamically determined or selected during **412** in accordance with algorithm(s), rule(s) or condition(s). For example, the weights can be dynamically determined based on relative locations of cameras on the AV, relative FOVs of the cameras that captured the images, and/or conditions of an environment external to an AV (e.g., a sensed amount of light, a sensed amount of rain, etc.). The weights can be computed using the listed information and/or selected from a list of predefined weights based on the listed information. Every feature in the combined spatial feature map will have a combined feature value.

In **414,** the combined spatial feature map is used to define predictions such as cuboid(s) for each object. Each predicted cuboid comprises an orientated 3D box encompassing features that are associated with a given object. Techniques for defining predicted cuboids from spatial feature maps are well known. One such known technique that can be employed in **414** is using linear regression of the feature's 3D coordinates to learn edges of an object in an image and using the edges to define a predicted 3D cuboidal shape for the object. The predicted 3D cuboidal shape defined for the object is referred to as a predicted cuboid.

In **416,** the predicted cuboids are optionally used to control autonomous operations of the vehicle. For example, the predicted cuboids are used to determine a track for the object. The object track can then be used to facilitate generation of a vehicle trajectory which the vehicle is caused to follow. Subsequently, **418** is performed where method **400** ends or other operations are performed.

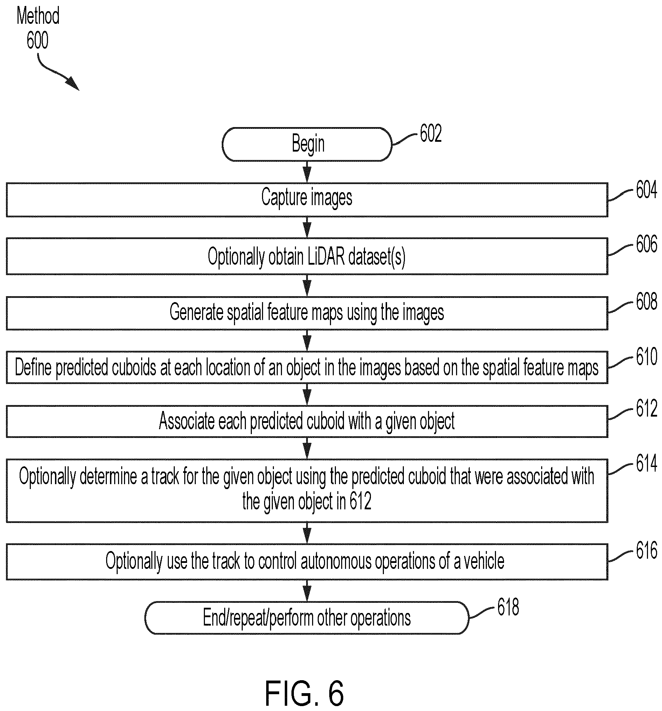

Referring now to FIG. 6, there is provided a flow diagram of another method **600** for image-based perception. In method **600,** machine learning algorithms (such as CNNs) are used to extract features from images. The features are used to predict 3D cuboids for objects in a scene. It can be challenging to determine if two or more cuboid predictions correspond to the same object from different cameras with overlapping FOVs. This is particularly challenging when only a partial view of an object is present in one or more cameras or when the cuboid estimates contain a relatively large amount of noise. Rather than rely solely on the estimated 3D coordinates when associating cuboids from multiple cameras, the present solution uses the machine learning algorithms to output a feature embedding that can be used for object-cuboid associations. This can be done by passing the intermediate features and camera calibration information in the region used for a cuboid's prediction through additional layers of computation (e.g., 2D convolutions and/or fully connected layers).

During training, the intermediate feature embedding output by the network can be passed into a loss function that encourages the embedding to have a small distance to embeddings for the same object from a different view, and a large distance from other objects. This can be accomplished via, for example, a triple loss algorithm.

During interference, the distance between embeddings can be utilized to determine if two cuboid predictions correspond to the same object. Once predictions are associated, the predicted cuboids can be refined into a single cuboid prediction, potentially leveraging intermediate network features.

As shown in FIG. 6, method **600** begins with **602** and continues with **604** where images are captured. The images can be captured by monocular cameras (e.g., cameras **262** of FIG. 2) with overlapping FOVs. The monocular cameras may be deployed on an AV (e.g., AV **102₁** of FIG. 1). Each image comprises 3 layers (or channels) of information superimposed on each other - a Red (R) layer, a Green (G) layer and a Blue (B) layer. This image may also be referred to as an RGB image. The images can be stored in a datastore local to and/or remote from the AV (e.g., datastore **112** of FIG. 1 and/or memory **312** of FIG. 3).

In **606,** LiDAR datasets may optionally be obtained by a computing device (e.g., computing device **110** of FIG. 1 and/or the vehicle on-board computing device **220** of FIG. 2). The LiDAR datasets may be generated by a LiDAR system (e.g., LiDAR system **264** of FIG. 2) of the AV. LiDAR datasets and LiDAR systems are well known.

In **608,** spatial feature maps are generated by the computing device using the images captured in **604.** The images can be used in, for example, a CNN to generate the spatial feature maps. For example, images **500, 510** of FIG. 5 are input into a CNN to produce output spatial feature maps **502, 512** of FIG. 5. CNNs and spatial feature maps are well known. The CNNs can apply filters or feature detectors to the images to produce the spatial feature maps. For example, a trained CNN takes an RGB image as an input, and optionally outputs the class of the 2D image (e.g., a person, a vehicle, a cyclist, a dog, etc.). The class of the image is determined based on learned data patterns during training of the CNN. Each spatial feature map indicates a location and a strength of each detected feature in an image. The features can include, but are not limited to, edges, vertical lines, horizontal lines, bends and/or curves. A certain combination of features in a certain area of an image can indicate that a larger, more complex feature may exists in the image. For example, a spatial feature map could detect a cyclist (e.g., cyclist **114** of FIG. 1) from a combination of line features and circle features in a given area of an image.

In **610,** predicted cuboids are defined at each location of an object in the images based on the spatial feature maps. Each predicted cuboid comprises an orientated 3D box encompassing features that are associated with a given object. Techniques for defining predicted cuboids from spatial feature maps are well known. One such known technique that can be employed in **610** is using linear regression of the feature's 3D coordinates to learn edges of an object in an image and using the edges to define a predicted 3D cuboidal shape for the object. The predicted 3D cuboidal shape defined for the object is referred to as a predicted cuboid. Such known techniques can be used in **610**. Additionally or alternatively, operations **410-414** of FIG. 4 can be performed in **610** to define the predicted cuboids.

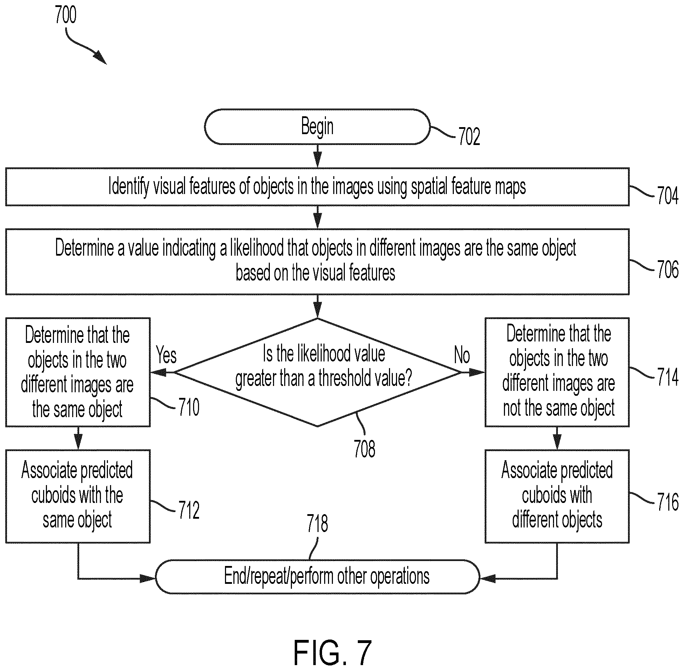

In **612,** each predicted cuboid is associated with a given object. The manner in which this association is made will be discussed in detail below in relation to FIGS. 7-8. Generally, **612** involves determining whether two or more of the predicted cuboids should be associated with a same detected object and assigning the predicted cuboids to detected objects based on results of the determinations. This assignment can be made, for example, by storing object identifiers in a datastore so as to be associated with the predicted cuboids.

Once the object-cuboid associations have been made, a track for a given object is optionally determined in **614**. Techniques for determining object tracks based on predicted cuboids are well known. The object track is then optionally used in **616** to control autonomous operations of a vehicle. For example, the predicted cuboids are used to determine a track for the respective object. The object track can then be used to facilitate generation of a vehicle trajectory which the vehicle is caused to follow. Subsequently, **618** is performed where method **600** ends or other operations are performed.

Referring now to FIG. 7, there is provided a flow diagram of an illustrative method **700** for associating predicted cuboids with objects. The operations of FIG. 7 can be performed in block **612** of FIG. 6. These operations involve identifying visual features of objects in the images using spatial feature maps, as shown by **704**. The visual features can include, but are not limited to, color, size and/or shape. Techniques for identifying or otherwise determining visual features for object from spatial feature maps are well known. One such technique that can be used in **704** is a triplet loss algorithm. The triplet loss algorithm generally applies a function (e.g., a 2D convolutional function) pointwise to each point of a spatial feature map included in a predicted cuboid to transform the same to a visual descriptor of what the object is.

Next in **706,** a value is determined that indicates a likelihood that objects in different images are the same object based on the visual features. For example, the value can comprise an overall similarity value ranging from 0 to ten, where 0 indicates no similarity and ten indicates the greatest degree of similarity. The overall similarity value can be selected or computed based on the presence of certain visual features (e.g., a similarity value of 10 is selected when the object in a first image and the object in a second image are the same color (e.g., red), have the same overall shape (e.g., a car shape) and/or have the same sequence of symbols on the license plate - a similarity value of 0 is selected when the objects do not have the same color, shape and/or sequence of symbols). In some scenarios, one is added to a score for each visual feature of the objects that is the same. So, if there are ten visual features under consideration, the overall similarity value can be zero when the objects have no similar visual feature, one when the objects have one similar visual feature, two when the objects have two similar visual features, etc. The present solution is not limited in this regard.

If the likelihood value is greater than a threshold value **[708:YES],** then method **700** continues with **710** where the computing device makes a determination that the objects in the two images are the same object. The computing device also performs operations in **712** to associate the corresponding predicted cuboids with the same object. Subsequently, **718** is performed where method **700** ends or other operations are performed.

In contrast, if the likelihood value is less than or equal to the threshold value **[708:NO],** then method **700** continues with **714** where the computing device makes a determination that the objects in the two images are different objects. The computing device also performs operations in **716** to associate the corresponding predicted cuboids with different objects. Subsequently, **718** is performed where method **700** ends or other operations are performed.

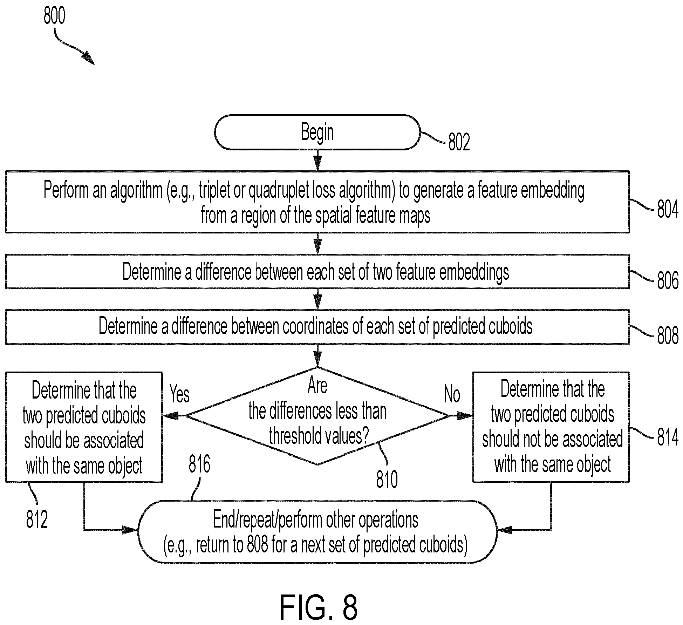

Referring now to FIG. 8, there is provided a flow diagram of an illustrative method 800 for associating predicted cuboids with objects. The operations of FIG. 8 can be performed in block **612** of FIG. 6.

Method **800** begins with **802** and continues with **804** where a feature embedding is generated from the region of the spatial feature maps for each predicted cuboid. The parameters for generating these feature embeddings can be learned via, for example, a triplet or quadruplet loss algorithm. The embeddings are used in **806** to obtain values for the visual features of each object in the images. These visual feature values are compared to each other to determine whether they are the same as each other by a certain amount or degree (e.g., 70% or the difference between two visual feature values is less than a threshold value). The generation of an additional embedding trained with, for example, a triplet loss algorithm addresses different angles of the objects and any occlusion of the objects. The feature embedding can be generated by applying a function (e.g., a 2D convolution function) point-wise to each point of the spatial feature map included in the predicted cuboid so as to transform the same to a data point feature embedding (e.g., visual descriptor of what the object is). Thus, the term "feature embedding" as used herein refers to a vector representation of visual and spatial features extracted from an image.

Triplet loss algorithms are well known. The triplet loss function is a machine learning algorithm where, during training, a baseline input is compared to a positive input and a negative input. The distance from the baseline input to the positive input is minimized, and the distance from the baseline input to the negative input is maximized. The triplet loss algorithm can be described using a Euclidean distance function as shown by the following mathematical equation (2).

$$\mathcal{L}(\mathbf{A}, \mathbf{P}, \mathbf{N}) = \max(\|\mathbf{f}(\mathbf{A}) - \mathbf{f}(\mathbf{P})\|^2 - \|\mathbf{f}(\mathbf{A}) - \mathbf{f}(\mathbf{N})\|^2 + \alpha, 0) \tag{2}$$

where $\mathbf{A}$ is an anchor input, $\mathbf{P}$ is a positive input of a same class as $\mathbf{A}$, $\mathbf{N}$ is a negative input of a different class as $\mathbf{A}$, $\alpha$ is a margin between positive and negative pairs, and f is a feature embedding.

Next in **806,** the computing device determines a difference between each set of two feature embeddings. For example, an L1 or L2 distance function can be used to determine this difference. The L1 distance function may be defined by the following mathematical equation (3).

$$\mathbf{L1} = \sum_{\mathbf{i=1}}^{\mathbf{n}} |\mathbf{y}_{\mathbf{true}} - \mathbf{y}_{\mathbf{predicted}}| \tag{3}$$

where $\mathbf{L1}$ represents results from performing the L1 distance function, $\mathbf{y_1}$ represents an embedding derived from one feature map, $\mathbf{y_2}$ represents an embedding derived from a second feature map, and $\mathbf{n}$ represents an integer greater than 1. The L2 distance function may be defined by the following mathematical equation (4).

$$\mathbf{L2} = \sum_{\mathbf{i=1}}^{\mathbf{n}} (\mathbf{y}_{\mathbf{true}} - \mathbf{y}_{\mathbf{predicted}})^2 \tag{4}$$

where $\mathbf{L2}$ represents results from performing the L2 distance function.

The computing device also determines a difference between coordinates of each set of predicted cuboids, as shown by **808.** Methods for determining differences between coordinate are well known. If the differences are less than respective threshold values **[810:YES],** then method **800** continues with **812** where a determination is made that the predicted cuboids should be associated with the same object. If the differences are less than the respective threshold values **[810:NO],** then method **800** continues with **814** where a determination is made that the predicted cuboids should not be associated with the same object. Subsequently, **816** is performed where method **800** ends or other operations are performed (e.g., return to **808** for a next set of predicted cuboids).

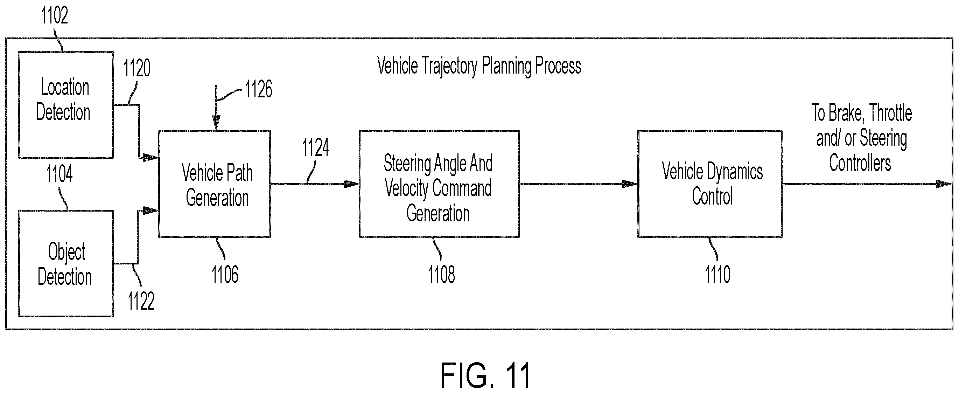

The predictions (e.g., cuboids) generated during methods **400, 600, 700** and/or **800** can be used by an AV for object trajectory prediction, general scene understanding, vehicle trajectory generation, and/or collision avoidance. A block diagram is provided in FIG. 11 that is useful for understanding how vehicle control is achieved in accordance with the object related information estimated based on the modified image. All or some of the operations performed in FIG. 11 can be performed by the on-board computing device of a vehicle (e.g., AV **102$_1$** of FIG. 1) and/or a remote computing device (e.g., computing device **110** of FIG. 1).

In block **1102,** a location of the vehicle is detected. This detection can be made based on sensor data output from a location sensor (e.g., location sensor **260** of FIG. 2) of the vehicle. This sensor data can include, but is not limited to, GPS data. Information **1120** specifying the detected location of the vehicle is then passed to block **1106.**

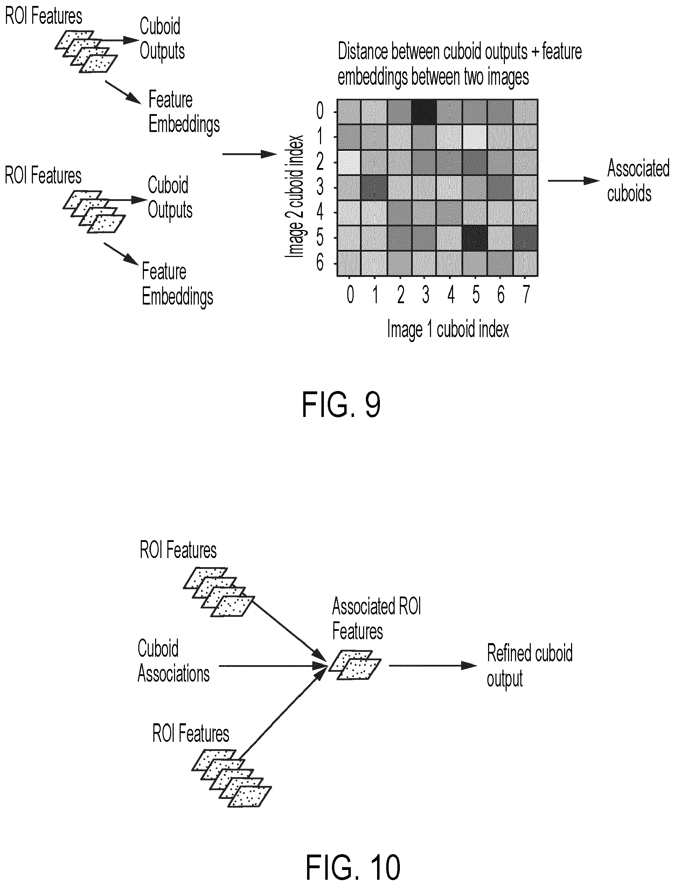

In block **1104,** an object is detected within proximity of the vehicle. This detection is made based on sensor data output from a camera (e.g., camera **262** of FIG. 2) of the vehicle and/or LiDAR datasets generated by a LiDAR system (e.g., LiDAR system 264 of FIG. 2) of the vehicle. The manner in which the image-based perception is achieved was discussed above in relation to FIGS. 4-10. Information about the detected object **1122** is passed to block **1106.** This information includes, but is not limited to, cuboid information (e.g., a position of an object, an orientation of the object, and a spatial extent of the object), an initial predicted trajectory of the object, a speed of the object, and/or a classification of the object. The initial predicted obj ect traj ectory can include, but is not limited to, a linear path pointing in the heading direction of the object.

In block **1106,** a vehicle trajectory is generated using the information from blocks **1102** and **1104.** Techniques for determining a vehicle trajectory are well known in the art. Any known or to be known technique for determining a vehicle traj ectory can be used herein without limitation. For example, in some scenarios, such a technique involves determining a trajectory for the AV that would pass the object when the object is in front of the AV, the object has a heading direction that is aligned with the direction in which the AV is moving, and the object has a length that is greater than a threshold value. The present solution is not limited to the particulars of this scenario. The vehicle trajectory **1124** can be determined based on the location information **1120,** the image-based perception information **1122,** and/or a road map **1126** which is pre-stored in a datastore of the vehicle. The vehicle trajectory **1124** may represent a smooth path that does not have abrupt changes that would otherwise provide passenger discomfort. For example, the vehicle trajectory is defined by a path of travel along a given lane of a road in which the object is not predicted travel within a given amount of time. The vehicle trajectory **1124** is then provided to block **1108.**

In block **1108,** a steering angle and velocity command is generated based on the vehicle trajectory **1124.** The steering angle and velocity command is provided to block **1110** for vehicle dynamics control.

As discussed above, the present disclosure concerns implementing systems and methods for image-based feature fusion. The methods comprise: capturing images by a plurality of cameras with overlapping fields of view; generating, by a computing device, spatial feature maps indicating features in the images at various 2D locations; identifying, by the computing device, overlapping portions of the spatial feature maps; generating, by the computing device, combined spatial feature map(s) by combining the overlapping portions of the spatial feature maps together; using, by the computing device, the combined spatial feature map(s) to define a predicted output as a cuboid for at least one object in the images; and/or using the predicted cuboid to control autonomous operations of a vehicle.

The spatial feature maps may be generated using a feature extraction module such as CNN or a position sensitive transformer network. The overlapping portions of the spatial feature maps may be identified based on: similarities between features in a first spatial feature map and features in a second spatial feature map; a distance between a feature in a first spatial feature map and a corresponding feature in a second spatial feature map; properties of predictions of the corresponding areas of the feature maps (e.g., 3D locations of predicted cuboids); and/or the camera calibration in tandem with depth values determined for the features using LiDAR datasets or a depth map. A portion of a first spatial feature map and a portion of a second spatial feature map may be considered overlapping portions when (i) features in the first and second spatial feature maps are similar by a certain amount and/or (ii) a distance between corresponding features in the first and second spatial feature maps are less than a threshold value. The combined spatial feature map(s) may be generated by adding together location values for corresponding features in the overlapping portions of the spatial feature maps to produce combined location values.

Implementing systems of the above-described methods for image-based perception and can include, but are not limited to, a processor and a non-transitory computer-readable storage medium comprising programming instructions that are configured to cause the processor to implement a method for image-based perception. The programing instructions can include instructions to: obtain images captured by a plurality of cameras with overlapping fields of view; generate spatial feature maps indicating locations of features in the images; identify overlapping portions of the spatial feature maps; generate at least one combined spatial feature map by combining the overlapping portions of the spatial feature maps together; and/or use the at least one combined spatial feature map to define predictions for scenes in the images.

The present disclosure also concerns a computer program product comprising a memory and programming instructions that are configured to cause a processor to: obtain images captured by a plurality of cameras with overlapping fields of view; generate spatial feature maps indicating locations of features in the images; identify overlapping portions of the spatial feature maps; generate at least one combined spatial feature map by combining the overlapping portions of the spatial feature maps together; and/or use the at least one combined spatial feature map to define a predicted cuboid for at least one object in the images.

Although the present solution has been illustrated and described with respect to one or more implementations, equivalent alterations and modifications will occur to others skilled in the art upon the reading and understanding of this specification and the annexed drawings. In addition, while a particular feature of the present solution may have been disclosed with respect to only one of several implementations, such feature may be combined with one or more other features of the other implementations as may be desired and advantageous for any given or particular application. Thus, the breadth and scope of the present solution should not be limited by any of the above described embodiments. Rather, the scope of the present solution should be defined in accordance with the following claims and their equivalents.

## Claims

1. A method for image-based perception, comprising:

capturing images by a plurality of cameras with overlapping fields of view;
generating, by a computing device, spatial feature maps indicating locations of features in the images;
identifying, by the computing device, overlapping portions of the spatial feature maps;
generating, by the computing device, at least one combined spatial feature map by combining the overlapping portions of the spatial feature maps together; and

using, by the computing device, the at least one combined spatial feature map to define a predicted cuboid for at least one object in the images.

2. The method according to claim 1, wherein the spatial feature maps are generated using a feature extraction module.

3. The method according to claim 2, wherein the feature extraction module comprises a convolutional neural network.

4. The method according to any of the preceding claims, wherein the overlapping portions of the spatial feature maps are identified based on similarities between features in a first spatial feature map and features in a second spatial feature map and/or based on a distance between a feature in the first spatial feature map and a corresponding feature in the second spatial feature map.

5. The method according to any of the preceding claims, wherein a portion of a first spatial feature map and a portion of a second spatial feature map are considered overlapping portions when (i) features in the first and second spatial feature maps are similar by a certain amount and (ii) a distance between corresponding features in the first and second spatial feature maps are less than a threshold value.

6. The method according to any of the preceding claims, wherein the overlapping portions of the spatial feature maps are identified based on depth values determined for the features using LiDAR datasets or a depth map.

7. The method according to any of the preceding claims, wherein the at least one combined spatial feature map is generated by adding together location values for corresponding features in the overlapping portions of the spatial feature maps to produce combined location values.

8. The method according to any of the preceding claims, further comprising using the predicted cuboid to control autonomous operations of a vehicle.

9. A system, comprising:

> a processor;
> a non-transitory computer-readable storage medium comprising programming instructions that are configured to cause the processor to implement a method for image-based perception, wherein the programming instructions comprise instructions to:
>
>> obtain images captured by a plurality of cameras with overlapping fields of view;
>> generate spatial feature maps indicating locations of features in the images;
>> identify overlapping portions of the spatial feature maps;
>> generate at least one combined spatial feature map by combining the overlapping portions of the spatial feature maps together; and
>> use the at least one combined spatial feature map to define predictions for scenes in the images.

10. The system according to claim 9, wherein the spatial feature maps are generated using a feature extraction module.

11. The system according to claim 9 or 10, wherein the overlapping portions of the spatial feature maps are identified based on similarities between features in a first spatial feature map and features in a second spatial feature map and/or based on a distance between a feature in a first spatial feature map and a corresponding feature in a second spatial feature map and/or based on depth values determined for the features using LiDAR datasets or a depth map and/or
wherein the at least one combined spatial feature map is generated by adding together location values for corresponding features in the overlapping portions of the spatial feature maps to produce combined location values.

12. The system according to any one of claims 9 to 11, wherein a portion of a first spatial feature map and a portion of a second spatial feature map are considered overlapping portions when

> (i) features in the first and second spatial feature maps are similar by a certain amount and
> (ii) a distance between corresponding features in the first and second spatial feature maps are less than a threshold value.

**13.** The system according to any one of claims 9 to 12, wherein the programming instructions further comprise instruction to cause autonomous operations of a vehicle to be controlled using the predictions for scenes in the images.

**14.** A computer program product comprising a memory and programming instructions that are configured to cause a processor to:

obtain images captured by a plurality of cameras with overlapping fields of view;
generate spatial feature maps indicating locations of features in the images;
identify overlapping portions of the spatial feature maps;
generate at least one combined spatial feature map by combining the overlapping portions of the spatial feature maps together; and
use the at least one combined spatial feature map to define a predicted cuboid for at least one object in the images.

**15.** The computer program product according to claim 14, wherein the programming instructions further cause the processor to perform a method according to any one of claims 2 to 8.

FIG. 1

EP 4 131 175 A1

**FIG. 2**

FIG. 3

Method
400

Begin — 402

Capture images — 404

Optionally obtain LiDAR dataset(s) — 406

Generate spatial feature maps using the images — 408

Identify overlapping portions of the spatial feature maps — 410

Combining the overlapping portions to generate a combined spatial feature map — 412

Use the combined spatial feature map to define predicted cuboid(s) for each object — 414

Optionally use the predicted cuboid(s) per object to control autonomous operations of a vehicle — 416

End/repeat/perform other operations — 418

FIG. 4

FIG. 5

Method
600

Begin — 602

Capture images — 604

Optionally obtain LiDAR dataset(s) — 606

Generate spatial feature maps using the images — 608

Define predicted cuboids at each location of an object in the images based on the spatial feature maps — 610

Associate each predicted cuboid with a given object — 612

Optionally determine a track for the given object using the predicted cuboid that were associated with the given object in 612 — 614

Optionally use the track to control autonomous operations of a vehicle — 616

End/repeat/perform other operations — 618

FIG. 6

FIG. 7

800

Begin — 802

Perform an algorithm (e.g., triplet or quadruplet loss algorithm) to generate a feature embedding from a region of the spatial feature maps — 804

Determine a difference between each set of two feature embeddings — 806

Determine a difference between coordinates of each set of predicted cuboids — 808

Determine that the two predicted cuboids should be associated with the same object

812

Yes

Are the differences less than threshold values?

816

810

No

Determine that the two predicted cuboids should not be associated with the same object — 814

End/repeat/perform other operations (e.g., return to 808 for a next set of predicted cuboids)

FIG. 8

FIG. 9

FIG. 10

FIG. 11

Europäisches
Patentamt

European
Patent Office

Office européen
des brevets

# EUROPEAN SEARCH REPORT

**Application Number**

EP 22 18 9006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/289282 A1 (BRIGGS FORREST SAMUEL [US] ET AL) 19 September 2019 (2019-09-19) * paragraph [0003] * * paragraph [0016] * * paragraph [0019] * * paragraph [0027] * * paragraph [0036] - paragraph [0037] * * paragraph [0054] - paragraph [0055] * * paragraph [0063] * * paragraph [0077] * * paragraph [0087] - paragraph [0088] * * figures 1, 3, 6 * | 1-15 | INV. G06V10/10 G06V10/82 G06V10/44 G06V10/80 G06V20/58 |
| A | GUOJUN WANG ET AL: "Multi-View Adaptive Fusion Network for 3D Object Detection", ARXIV.ORG, CORNELL UNIVERSITY LIBRARY, 8 December 2020 (2020-12-08), XP081830838, 201 OLIN LIBRARY CORNELL UNIVERSITY ITHACA, NY 14853 * page 2, column 1, last paragraph - column 1, paragraph 1 * * Section III. * | 1-15 | |
| | | | **TECHNICAL FIELDS SEARCHED (IPC)** |
| A | QI CHEN: "F-Cooper: Feature based Cooperative Perception for Autonomous Vehicle Edge Computing System Using 3D Point Clouds", ARXIV.ORG, CORNELL UNIVERSITY LIBRARY, 13 September 2019 (2019-09-13), XP081477159, 201 OLIN LIBRARY CORNELL UNIVERSITY ITHACA, NY 14853 * Sections 1.1, 1.2 * * Section 2.1 * * Section 3.2 * * figures 3, 5, 8 * | 1-15 | G06V G06K B60W G06T |

-/--

The present search report has been drawn up for all claims

| Place of search | Date of completion of the search | Examiner |
|---|---|---|
| The Hague | 16 December 2022 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

      

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 22 18 9006

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2017/177367 A1 (WANG XIAOGANG [CN]) 19 October 2017 (2017-10-19)<br><br>* paragraph [0023] - paragraph [0024] *<br>* paragraph [0030] *<br>* figure 3 *<br>* claims 1, 3 *<br>----- | 1-5,7, 9-12,14, 15 | |
| A | US 2019/050692 A1 (SHARMA VINOD [US] ET AL) 14 February 2019 (2019-02-14)<br>* paragraph [0025] *<br>* paragraph [0029] *<br>* paragraph [0049] *<br>* paragraph [0055] - paragraph [0059] *<br>----- | 1,6-9, 13-15 | |

TECHNICAL FIELDS
SEARCHED       (IPC)

The present search report has been drawn up for all claims

| Place of search | Date of completion of the search | Examiner |
|---|---|---|
| The Hague | 16 December 2022 | Moreno, Marta |

EPO FORM 1503 03.82 (P04C01)

## ANNEX TO THE EUROPEAN SEARCH REPORT
## ON EUROPEAN PATENT APPLICATION NO.

EP 22 18 9006

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2022

| Patent document cited in search report | | Publication date | Patent family member(s) | | Publication date |
|---|---|---|---|---|---|
| US 2019289282 | A1 | 19-09-2019 | US 2019289282 A1 | | 19-09-2019 |
| | | | US 2021092349 A1 | | 25-03-2021 |
| | | | WO 2019178036 A1 | | 19-09-2019 |
| WO 2017177367 | A1 | 19-10-2017 | CN 109074473 A | | 21-12-2018 |
| | | | US 2019043205 A1 | | 07-02-2019 |
| | | | WO 2017177367 A1 | | 19-10-2017 |
| US 2019050692 | A1 | 14-02-2019 | NONE | | |

EPO FORM P0459

For more details about this annex : see Official Journal of the European Patent Office, No. 12/82